# EUROPÄISCHE PATENTANMELDUNG

(11) **EP 2 369 296 A2**
(43) Veröffentlichungstag der Anmeldung: **28.09.2011**
(21) Anmeldenummer: 11002398.3
(22) Anmeldetag: 23.03.2011
(51) Int. Cl.: G01C 21/00

(54) **Navigationsverfahren für einen Flugkörper**

(30) Priorität: 24.03.2010 DE 102010012445; 11.02.2011 DE 102011010987
(71) Anmelder: LFK-Lenkflugkörpersysteme GmbH, 86529 Schrobenhausen (DE)
(72) Erfinder: Holicki, Michael, 80804 München (DE); Zoz, Jürgen, 86316 Friedberg (DE); Schweyer, Nikolaus, 81739 München (DE)
(74) Vertreter: Avenhaus, Beate

(57) **Zusammenfassung**

Ein von einem Aufklärer aufgenommenes SAR-Bild wird als Referenzkantenbild zusammen mit den Daten der Trajektorie als Referenz übergeben. Das Signal des Infrarot-Suchkopfes des Flugkörpers wird in ein virtuelles SAR-Kantenbild umgewandelt und mit dem SAR-Referenzbild zur Berechnung der genauen Position des Flugkörpers verglichen.

## Beschreibung

### Beschreibung

Die Erfindung betrifft ein Navigationsverfahren für einen Flugkörper, welcher einen Infrarotsuchkopf, ein Inertialnavigationssystem (INS) sowie eine Einrichtung zur vergleichenden Auswertung aktuell aufgenommener Bilder mit gespeicherten Referenzbildern aufweist, wobei bei der Auswertung zunächst eine Vielzahl von 3D-Linien zur dreidimensionalen Rekonstruktion der erfassten Szene aus den aufgenommenen Bildern erzeugt wird und diese Linien unter Berücksichtigung der Perspektive der zur Verfügung stehenden Referenz verglichen werden und daraus die aktuelle Lage und Position des Flugkörpers bestimmt wird.

Es sind diverse Verfahren zur Navigation eines Flugkörpers bekannt. Dazu zählt zunächst die Nutzung eines Satellitennavigationssystems (GPS = Global Positioning System), welches nur dann eine präzise Navigation ermöglicht, solange die Kommunikation mit den entsprechenden Satelliten nicht gestört ist.

Weiterhin werden Trägheitsnavigationssysteme genutzt, deren Genauigkeit jedoch mit zunehmender Flugstrecke abnimmt. Auch die Kombination beider genannten Systeme ergibt nicht in jeder Fallkonstellation die gewünschte ununterbrochene Führung entlang einer bestimmten Flugroute.

Somit ist es erforderlich, ein weiteres System zu nutzen, welches vor der jeweiligen Mission aufgenommenes Bildmaterial aufbereitet und als Referenz im Navigationsrechner des Flugkörpers bereitstellt. Derartige Referenzstrukturen können aus Landkarten, Satelliten- oder Luftbildern gewonnen werden.

Während der Mission übernimmt beispielsweise der Suchkopf, der von oben auf den Flugpfad des Flugkörpers gerichtet ist und fortlaufend Bilder erzeugt, die im Navigationsrechner des Flugkörpers aufbereitet und mit den Daten der vorgenannten Systeme verglichen werden. Es ist üblich, hierfür Infrarot-Kameras zu verwenden.

Aus der DE 10 2007 054 950 A1 ist ein Verfahren zur Stützung der selbsttätigen Navigation eines eine vorwärts schauende Kamera und ein Inertialnavigationssystem (INS) aufweisenden Flugkörpers bekannt geworden, welches die Daten aus der von der Kamera aufgenommenen aktuellen Szene mit den im Flugkörper zur Verfügung stehenden Referenzbildern vergleicht. Insbesondere wird aus den aufgenommenen Bildern mittels einer 3D-Rekonstruktion eine Vielzahl von 3D-Linien bestimmt, die in die Perspektive der zur Verfügung stehenden Referenzbilder projiziert werden. Anschließend wird durch Abgleich mit der Referenz die aktuelle Position und Lage des Flugkörpers bestimmt und damit die Navigation unterstützt. Somit findet der Abgleich mit einem optischen Bild statt. Deshalb genügt es, das aus dem Kamerabild erzeugte 3D-Bild in ein Referenzbild zu projizieren. Gemäß der Aufgabenstellung ist diese Druckschrift speziell auf die Verwendung einer für den Infrarotbereich oder für den sichtbaren Bereich ausgelegte Kamera und die Verarbeitung deren Daten ausgelegt. Auf die Verwendung von Systemen, die in anderen Frequenzbereichen arbeiten, und auf die spezielle Verarbeitung der Daten solcher Systeme wird kein Hinweis gegeben.

In zunehmendem Maß werden Aufklärungssysteme verwendet, die mit einem Radar mit synthetischer Apertur (SAR) arbeiten. SAR-Sensoren sind leistungsfähige Systeme zur Femaufklärung. Sie sind allwetterfähig und liefern auch für weit entfernte Objekte eine hohe Ortsauflösung. Allerdings ist aufgrund der Besonderheiten dieses Abbildungsprinzips die Interpretation von SAR-Bildern schwierig und zu herkömmlichem Bildmaterial stark unterschiedlich.

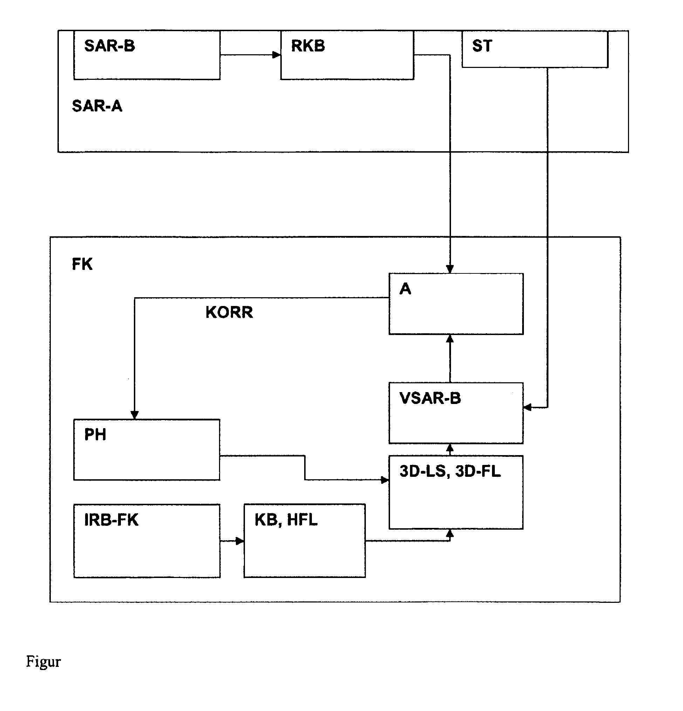

Die DE 69306069 T2 beschreibt ein Verfahren, welches ein Referenzbild mit dem SAR-Bild des Flugkörpers abgleicht um damit die Navigation des Flugkörpers zu stützen. Dies wird im Wesentlichen durch die Korrelation des SAR-Bildes mit dem Referenzbild erreicht. Letztlich wird bei diesem Verfahren nur ein 2D-2D - Abgleich durchgeführt. Bezüglich der Behandlung der bekannten SAR-Artefakte wird nur darauf hingewiesen, dass diese zu einer geringen Verformung der Geometrie der Abbildung führen. Es wird vereinfachend davon ausgegangen, dass trotz dieser Verformung eine Korrelation zwischen dem SAR-Bild und dem Referenzbild zu einer korrekten Lokalisierung des Flugkörpers führt und auftretende Höhenfehler anschließend mit Methoden der Störungsrechnung behandelt werden können. Sobald jedoch die überflogene Szene erhabene Objekte wie hohe Gebäude etc. aufweist ist die Verformung der Geometrie eben nicht mehr gering und ein 2D-2D - Abgleich wird zu ungenauen Ergebnissen führen.

Es ist deshalb Aufgabe der Erfindung, eine Erweiterung eines bekannten Navigationssystems für den Betrieb mit auf SAR-Basis erzeugten Referenzbildern vorzuschlagen, welches in der Lage ist Szenarien mit großen Höhenunterschieden korrekt aufzulösen.

Diese Aufgabe wird erfindungsgemäß dadurch gelöst dass als Referenz SAR (Synthetic Aperture Radar) -Bilder verwendet werden, welche von einem SAR-Aufklärer stammen, der zu einem früheren Zeitpunkt und mit bekannter Trajektorie die Daten des überflogenen Geländes erfasst und gespeichert hat und aus welchen aus 3D-Liniensegmenten bestehende Referenzkantenbilder erzeugt werden, wobei diese zusammen mit den zum jeweiligen Bild gehörenden Trajektoriendaten als Referenz für das Navigationsverfahren des Flugkörpers bereit gestellt werden, und dass aus den Bildern des Infrarotsuchkopfes von 3D-Linien berandete homogene Flächen und deren räumliche Lage gewonnen werden, wobei unter Berücksichtigung der 3D-Struktur der überflogenen Szene für jedes erfasste 3D-Objekt die entsprechende Azimut- und die Range-Position berechnet werden, und wobei die Layover-Effekte der SAR-Bilder nachgebildet werden und mittels Analyse der Verdeckungen von 3D-Flächen die SAR-Schattenkanten im virtuellen Referenzkantenbild generiert werden, und dass die von den Bildern des Infrarotsuchkopfes stammenden und aus den Berechnungen erzeugten virtuellen SAR-Bilder von mit den als Referenz vorliegenden Referenzkantenbildern und den Trajektoriendaten mittels einer vergleichenden Auswertung verglichen und daraus ständig aktualisierte Position- und Lagedaten des Flugkörpers berechnet werden.

Typische SAR-Artefakte sind der Grund dafür, dass SAR-Bilder nicht einfach mit den Methoden der Auswertung eines IR-Bildes bearbeitet werden können. Ein SAR-Bild unterscheidet sich von einem IR-Bild dadurch, dass für jeden Bildpunkt nicht Ortskoordinaten sondern die Richtung und der Abstand zum Bildpunkt gemessen werden. Solange eine Szene eben ist führt dies zu qualitativ gleichwertigen Bildern, da in diesem Fall ein eindeutiger Zusammenhang zwischen Aspekt-Winkel und Abstand besteht.

Diese Situation ändert sich jedoch, wenn die Szene nicht mehr flach ist oder beispielsweise höhere Gebäude enthält. In diesem Fall erzeugt die SAR-Abbildung von den einzelnen Punkten der Gebäudefassade ein auf den Boden geklapptes Spiegelbild, weil diese Punkte in der gleichen Entfernung wie ihr Spiegelbild auf dem Boden liegen. Dies wird Layover-Effekt genannt.

Ein weiteres Artefakt ist der so genannte SAR-Schatten. Dieser tritt auf, wenn durch die Abschirmung von anderen Objekten in einem gewissen Entfernungsbereich keine Rückstrahlungen erfolgen. Diese SAR-Schatten bilden in SAR-Bildern oft sehr deutlich sichtbare Kanten aus, die aber keinerlei Entsprechung im optischen Bild haben. Diese Schatten führen dazu, dass für Szenen mit erhabenen Objekten ein direkter Abgleich von SAR-Bild und optischem Bild zu Fehlern führt.

Die in den oben genannten Druckschriften genannten Verfahren, bei denen optische Bilder und SAR-Bilder direkt miteinander verglichen werden, führen folglich zu einem systematischen Positionierungsfehler

Der besondere Vorteil der Erfindung ist darin zu sehen, dass erstmals ein Flugkörper mit Infrarotsuchkopf die Bilddaten eines hochgenauen SAR-Aufklärungssystems als Referenzbilder benutzt, wodurch die Genauigkeit der Navigation gegenüber bisherigen Systemen deutlich verbessert werden konnte.

Ein Ausführungsbeispiel der Erfindung ist schematisch vereinfacht in der einzigen Figur der Zeichnung dargestellt und wird im Folgenden näher beschrieben.

Die Zeichnung zeigt zunächst zwei Funktionsblöcke. Derjenige mit dem Bezugszeichen SAR-A steht symbolisch für einen SAR-Aufklärer, der zu einem früheren Zeitpunkt und mit bekannter Trajektorie die Daten desjenigen Geländes erfasst und gespeichert hat, über dem die Mission des Flugkörpers FK stattfinden soll. Der Flugkörper FK ist mit seinen für die Erfindung wesentlichen Komponenten als zweiter Funktionsblock dargestellt.

Der Aufklärer SAR-A nimmt ein SAR-Bild auf und extrahiert daraus eine Vielzahl von Liniensegmenten, die zusammen das Referenzkantenbild RKB ergeben. Dieses Referenzkantenbild RKB wird dem Flugkörper FK für die Mission als Referenz zur Verfügung gestellt, wie dies mit einem Pfeil angedeutet wird.

Weiterhin werden im Aufklärer SAR-A die Daten der Sensortrajektorie ST aufgezeichnet und ebenfalls dem Flugkörper FK übergeben. Dies ist ebenfalls mit einem Pfeil dargestellt.

Während der Mission nimmt die im Suchkopf des Flugkörpers FK montierte Kamera fortwährend Bilder der Szene unterhalb des Flugkörpers auf, wobei die Kamera in der Regel schräg nach vorne gerichtet ist. Die damit erzeugten Infrarotbilder IRB-FK werden anschließend verarbeitet. Dabei wird mittels einer 3D-Rekonstruktion, wie sie in der DE 10 2007 054 950 A1 beschrieben ist, die 3D-Struktur der Szene unter dem Flugkörper FK berechnet. Das Ergebnis ist eine Vielzahl von 3D-Liniensegmenten LS, die den Kantenbildern der Szene entsprechen.

Zeitgleich werden in den Infrarot-Bildern IRB-FK homogene Flächen, die von den gefundenen Liniensegmenten berandet werden, mittels eines Rechenverfahrens extrahiert. Ein solches Verfahren ist unter dem Namen Region Growing bekannt geworden. Die 3D-Struktur der Liniensegmente, welche die Flächen umgeben, wird dazu benutzt um die 3D-Lage dieser Flächen zu bestimmen. Das Ergebnis dieses Rekonstruktionsprozesses ist eine Vielzahl von Liniensegmenten LS und 3D-Flächen HFL. Daraus wird dann ein virtuelles SAR-Bild VSAR-KB bestimmt. Hierbei werden die gespeicherten Daten der Sensortrajektorie ST mit berücksichtigt. Diese 3D-Struktur ermöglicht es zusammen mit der bekannten Trajektorie des Aufklärers SAR-A und einer aus dem internen Trägheitsnavigationssystem stammenden Hypothese für die momentane Position des Flugkörpers FK, eine Hypothese für die 3D-Struktur des SAR-Bildes zu bestimmen. Dazu werden die gefundenen 3D-Linien unter Berücksichtigung des Layover-Effekts in die SAR-Ebene projiziert. Die 3D-Flächen

HFL und ihre Lage werden dazu verwendet um die Position der relevanten geometrischen Effekte wie Schattenkanten und Corner-Reflektoren zu finden. Das Resultat ist dann ein virtuelles SAR-Bild.

Das virtuelle SAR-Bild VSAR-B wird dann im nächsten Schritt A mit Hilfe eines Verfahrens für Linienmatching mit dem als Referenz abgespeicherten SAR-Kantenbild RKB abgeglichen. Aus der Disparität der beiden Bilder lässt sich dann eine Korrektur KORR der Positionshypothese PH des Flugkörpers FK berechnen. Damit wird die Navigation des Flugkörpers unterstützt.

Entscheidend ist es bei diesem Verfahren der Umwandlung eines IR-Bildes in ein SAR-Bild, dass die SAR-typischen geometrischen Charakteristika in gleicher Weise berücksichtigt werden wie wenn ein aktuell aufgenommenes SAR-Bild mit einem gespeicherten SAR-Referenzbild verglichen würde. Nur auf diese Weise kann der Vorteil der hohen Auflösung bei der SAR-Auswertung genutzt werden.

### Bezugszeichenliste

- A: Auswertungsverfahren
- FK: Flugkörper
- HFL: homogene Fläche
- INS: Inertialnavigationssystem
- IRB-FK: IR-Bilder des FK-Suchkopfes
- KB: Kantenbild mit 3D-Linien
- KORR: Korrektur
- LS: Liniensegment
- PH: Positionshypothese
- RKB: Referenzkantenbilder
- SAR: Synthetic-Aperture-Radar
- SAR-A: SAR-Aufklärer
- SAR - B: SAR - Bilder
- ST: Trajektoriendaten
- VSAR - B: virtuelles SAR-Bild
- 3D - FL: aus IR-Bild gewonnene Liniensegmente in 3D
- 3D - LS: aus IR-Bild gewonnene Flächen in 3D

## Patentansprüche

1. Navigationsverfahren für einen Flugkörper, welcher einen Infrarotsuchkopf, ein Inertialnavigationssystem (INS) sowie eine Einrichtung zur vergleichenden Auswertung (A) aktuell aufgenommener Bilder mit gespeicherten Referenzbildern aufweist, wobei bei der Auswertung zunächst eine Vielzahl von 3D-Linien zur dreidimensionalen Rekonstruktion der erfassten Szene aus den aufgenommenen Bildern erzeugt wird und diese Linien unter Berücksichtigung der Perspektive der zur Verfügung stehenden Referenz verglichen werden und daraus die aktuelle Lage und Position des Flugkörpers bestimmt wird, **dadurch gekennzeichnet,**
- **dass** als Referenz SAR (Synthetic Aperture Radar) -Bilder (SAR-B) verwendet werden, welche von einem SAR-Aufklärer (SAR-A) stammen, der zu einem früheren Zeitpunkt und mit bekannter Trajektorie die Daten des überflogenen Geländes erfasst und gespeichert hat und aus welchen aus 3D-Liniensegmenten bestehende Referenzkantenbilder (RKB) erzeugt werden, wobei diese zusammen mit den zum jeweiligen Bild gehörenden Trajektoriendaten (ST) als Referenz für das Navigationsverfahren des Flugkörpers (FK) bereit gestellt werden,
- **dass** aus den Bildern (IRB-FK) des Infrarotsuchkopfes von 3D-Linien (KB) berandete homogene Flächen (HFL) und deren räumliche Lage gewonnen werden, wobei unter Berücksichtigung der 3D-Struktur der überflogenen Szene für jedes erfasste 3D-Objekt die entsprechende Azimut- und die Range-Position berechnet werden, und wobei die Layover-Effekte der SAR-Bilder (SAR-B) nachgebildet werden und mittels Analyse der Verdeckungen von 3D-Flächen die SAR-Schattenkanten im virtuellen Referenzkantenbild (RKB) generiert werden,
- **dass** die von den Bildern (IRB-FK) des Infrarotsuchkopfes stammenden und aus den Berechnungen erzeugten virtuellen SAR-Bilder (VSAR-KB) von mit den als Referenz vorliegenden Referenzkantenbildern (RKB) und den Trajektoriendaten (ST) mittels einer vergleichenden Auswertung (A) verglichen und daraus ständig aktualisierte Position- und Lagedaten des Flugkörpers berechnet werden.
